# EUROPÄISCHE PATENTSCHRIFT

(11) **EP 3 368 799 B1**
(45) Veröffentlichungstag und Bekanntmachung des Hinweises auf die Patenterteilung: **30.06.2021**
(21) Anmeldenummer: 16782257.6
(22) Anmeldetag: 18.10.2016
(51) Int. Cl.: F16H 63/30, F16D 11/14, F16D 11/00

(54) **SCHALTVORRICHTUNG UND ANTRIEBSEINHEIT FÜR EIN KRAFTFAHRZEUG**
SHIFTING DEVICE AND DRIVE UNIT FOR A MOTOR VEHICLE
DISPOSITIF DE CHANGEMENT DE VITESSES ET UNITÉ D'ENTRAÎNEMENT POUR UN VÉHICULE AUTOMOBILE

(30) Priorität: 30.10.2015 DE 102015221274
(43) Veröffentlichungstag der Anmeldung: 05.09.2018
(73) Patentinhaber: Volkswagen Aktiengesellschaft, 38440 Wolfsburg (DE)
(72) Erfinder: PETERSEN, Rainer, 38444 Wolfsburg (DE); MÖCKEL, Jörg, 38524 Sassenburg (DE); LUTZ,Andreas, 38104 Braunschweig (DE); SCHRÖDER, Hendrik, 38173 Sickte (DE); MEISSNER, Christian, 38126 Braunschweig (DE)
(86) Internationale Anmeldenummer: PCT/EP2016/074989
(87) Internationale Veröffentlichungsnummer: WO 2017/071993

(56) Entgegenhaltungen:
- DE-A1- 10 115 504
- DE-A1-102004 049 274
- DE-A1-102008 000 647
- DE-A1-102008 045 791
- DE-A1-102014 201 251

## Beschreibung

Die Erfindung bezieht sich auf eine Schaltvorrichtung gemäß Anspruch 1.

Die Erfindung bezieht sich weiter auf eine Antriebseinheit für ein Kraftfahrzeug gemäß Anspruch 6.

Eine Schaltvorrichtung der genannten Art ist bekannt aus der DE 10 2004 049 274 A1 . Eine Antriebseinheit der genannten Art ist bekannt aus der DE 10 2014 201 251 A.

Moderne Kfz-Getriebe zeichnen sich durch eine Vielzahl von Gang- und/oder Betriebsmodus-Wahlmöglichkeiten bei gleichzeitig sehr kompakter Bauweise aus. Dies wird unter anderem durch koaxiale Verschachtelung von Wellen und enge Nachbarschaft von Relativrotationskörpern im Getriebe erreicht. Unter Relativrotationskörpern seien im vorliegenden Zusammenhang relativ zueinander drehbeweglich gelagerte Elemente eines Getriebes bezeichnet. Es können dies zum Beispiel Wellen sein, die relativ zueinander aber auch relativ zu einem Gehäuse drehbar sind. Andererseits seien hier auch gehäusefeste Elemente, die ja zu den Wellen eine Relativdrehung zeigen, als unter diesem Begriff subsumierbar verstanden. Gang- bzw. Betriebsmodus-Wechsel werden in der Regel durch hier als Schaltvorgänge bezeichnete Änderungen der Kopplung zwischen solchen Relativrotationskörpern erzielt. Typische Schaltelemente sind dabei Bremsen (beispielsweise zur drehfesten Kopplung einer Welle mit einem Gehäuses) und Kupplungen (beispielsweise zur drehfesten Kopplung zweier Wellen untereinander). Die enge Schachtelung der Elemente erlaubt dabei vielfach die Kombination mehrerer Schaltfunktionen in einem Schaltmodul bzw. erfordert eine solche Integration sogar.

Aus der eingangs genannten, für die erfindungsgemäße Antriebseinheit gattungsbildenden DE 10 2014 201 251 A1ist ein solches Mehrfach-Schaltmodul bekannt, welches unterschiedliche, formschlüssige Kopplungen zwischen drei koaxialen Wellen ermöglicht. Zwei der drei koaxialen Wellen sind dabei axial voneinander beabstandet und werden gemeinsam von einer dritten Welle koaxial durchsetzt. Die Enden der beiden erstgenannten Wellen tragen jeweils einen Verzahnungskörper. In der Lücke zwischen diesen Wellen erstreckt sich der Verzahnungskörper der dritten Welle. Alle Verzahnungskörper tragen eine gleichartige Außenverzahnung. Die drei Verzahnungskörper werden von einer Schiebehülse umgriffen, die eine korrespondierende Innenverzahnung aufweist. Diese Innenverzahnung ist jedoch nicht axial durchgängig, sondern umfasst zwei Verzahnungs-Axialbereiche, die durch eine Lücke voneinander beabstandet sind. Je nach Schiebestellung der Schiebehülse kann deren Innenverzahnung in die Außenverzahnungen eines, zweier (in unterschiedlichen Paarungen) oder aller drei Verzahnungskörper eingreifen und diese so miteinander koppeln. Es ist offensichtlich, dass die Schiebehülse mit den Wellen mitdrehen können muss, d.h. im Gehäuse drehbar gelagert ist. Um die für einen Schaltvorgang, d.h. für eine Änderung der Kopplungskonstellation der Wellen, erforderliche Axialverschiebung der Schiebehülse bewirken zu können, ist diese ihrerseits in einer sie umgreifenden Betätigungshülse gelagert. Die Lagerung erfolgt mittels Axialkräfte aufnehmender Radiallager, d.h. Schiebehülse und Betätigungshülse sind rotativ voneinander entkoppelt; gleichwohl können auf die Betätigungshülse einwirkende Axialkräfte auf die Schiebehülse übertragen werden. Die Betätigungshülse, die ihrerseits wiederum in einer gehäusefesten, geschlitzten Führungshülse gleitgelagert ist, ist über eine Hebelverbindung mit einem motorischen Antrieb verbunden, mit dem ihre für einen Schaltvorgang erforderliche Axialbewegung bewirkt wird.

Die bekannte Schaltvorrichtung ist vergleichsweise sperrig und ermöglicht auch nur die Kopplung zwischen den genannten Wellen. Eine Kopplung einer oder mehrerer dieser Wellen mit äußeren Relativrotationskörpern des Getriebes, beispielsweise dem Rotor einer elektrischen Maschine und/oder dem Getriebegehäuse ist mit der bekannten Vorrichtung nicht möglich. Entsprechend beschränkt ist die Komplexität der damit realisierbaren Kopplungskonstellationen.

Aus der DE 10 2008 000 647 A1 ist ein Mehrfach-Schaltmodul bekannt, mittels dessen zwei beidseitig einer axial verschieblichen Schiebehülse angeordnete Losräder alternativ einzeln oder gemeinsam mit einer gemeinsamen Welle drehfest verbindbar sind. Die Schiebehülse verfügt hierzu über eine Außenverzahnung, die entsprechend in korrespondierende, untereinander gleichartig gestaltete Innenverzahnungen der Losräder einzugreifen vermag.

Aus der DE 10 2008 045 791 A1 ist eine Doppelkupplung bekannt. Jede Einzelkupplung der Doppelkupplung weist eine Kupplungsnabe auf, die mittels einer Steckverzahnung und entsprechender Axiallagerung auf einer zugeordneten von zwei koaxialen Getriebewellen dreh- und axial fest fixiert ist. Jede der beiden Kupplungsnaben, die unterschiedliche Durchmesser aufweisen, ist mit einem zugeordneten, einen ersten Lamellensatz tragenden ersten Lamellenträger verbunden. Jeder erste Lamellenträger kann über reibschlüssige Wechselwirkung mit einem zugeordneten, zweiten Lamellenträger eine drehfeste Verbindung eingehen. Die beiden zweiten Lamellenträger sind mit einer gemeinsame Eingangswelle verbunden, deren Drehmoment durch entsprechende Steuerung der Einzelkupplungen unterschiedlich auf die Getriebewellen übertragen werden kann.

Eine vergleichbare Doppelkupplung ist in der DE 101 15 504 A1 offenbart.

Aus der eingangs genannten, für die erfindungsgemäße Schaltvorrichtung gattungsbildenden DE 10 2004 049 274 A1 ist eine Schaltanordnung zur bedarfsweisen Kopplung dreier auf einer Welle gelagerter Losrädern bekannt. Je nach Schaltstellung werden entweder zwei erste Losräder drehfest miteinander verbunden oder es wird ein zweites Losrad drehfest mit einem wellenfesten Synchronkörper gekoppelt. Hierzu weist die Schaltanordnung eine zweiteilige Schiebehülse auf, die mittels einer Schaltgabel axial verschoben. Die beiden Hülsenteile sind gegeneinander drehentkoppelt aber axial schiebesteif miteinander verbunden. Jeder der Hülsenteile weist eine Innenverzahnung auf, die zu Außenverzahnungen der Losräder passt. Ein erster Hülsenteil, dessen Innenverzahnung stets in die Außenverzahnung eines der ersten Losräder eingreift, lässt sich bei Axialverschiebung der Schiebehülse so über das andere erste Losrad schieben, dass beide erste Losräder drehfest miteinander verbunden sind. Der zweite Hülsenteil, der drehfest auf dem wellenfesten Synchronkörper gelagert ist, lässt sich bei Axialverschiebung der Schiebehülse so über das zweite Losrad schieben, dass dieses drehfest mit dem Synchronkörper verbunden ist. Außer den beiden genannten Schaltstellungen lässt sich mit der bekannten Schaltvorrichtung nur noch eine weitere Stellung, nämlich eine Neutralstellung, in der weder die beiden ersten Losräder miteinander noch das zweite Losrad mit dem wellenfesten Synchronkörper verbunden sind.

Es ist die Aufgabe der vorliegenden Erfindung eine verbesserte, bauraumschonende Schaltvorrichtung und damit eine verbesserte Antriebseinheit für ein Kraftfahrzeug zur Verfügung zu stellen, bei denen komplexere Kopplungskonstellationen realisierbar sind.

Diese Aufgabe wird in Verbindung mit den Merkmalen des Oberbegriffs von Anspruch 1 dadurch gelöst, dass die Schiebehülse mittels einer axial erstreckten Gewindestruktur in einer sie koaxial umgreifenden Betätigungshülse gelagert ist.

Die Aufgabe wird weiter in Verbindung mit den Merkmalen des Oberbegriffs von Anspruch 6 dadurch gelöst, dass die Schaltvorrichtung als eine derartige, erfindungsgemäße Schaltvorrichtung ausgebildet ist, wobei der zweite Hülsenteil der Schiebehülse mit dem Rotor der elektrischen Maschine verbunden ist.

Bevorzugte Ausführungsformen der Erfindung sind Gegenstand der abhängigen Ansprüche.

Ein wesentliches Merkmal der Erfindung ist es, die Schiebehülse zweiteilig auszugestalten. Die beiden Teile sind dabei axial miteinander verbunden, sodass nach wie vor eine gemeinsame axiale Verschieblichkeit der gesamten Schiebehülse gegeben ist. Allerdings sind die beiden Hülsenteile im Gegensatz zum Stand der Technik rotativ voneinander entkoppelt. Mit anderen Worten sind sie relativ zueinander drehbar gelagert. Jeder der beiden Hülsenteile trägt dabei einen der beiden Verzahnungs-Axialbereiche der Innenverzahnung. Der Fachmann wird in diesem Kontext erkennen, dass die Vorgabe zweier Verzahnungs-Axialbereiche keineswegs als Maximalanzahl solcher Verzahnungs-Axialbereiche zu verstehen ist. Selbstverständlich ist es grundsätzlich möglich, innerhalb jedes einzelnen Hülsenteils mehr als einen Verzahnungs-Axialbereich vorzusehen, sodass die Funktionen des Standes der Technik mit einem einzelnen Hülsenteil erfüllt werden könnten. Erfindungswesentlich ist hier, dass jeder der beiden zueinander drehentkoppelten Hülsenteile wenigstens einen Verzahnungs-Axialbereich trägt. Diese Maßnahme erlaubt es, die Verzahnungskörper mit unterschiedlichen externen Relativrotationskörpern zu koppeln. Als externe Relativrotationskörper seien hier Relativrotationskörper verstanden, die nicht eine der die Verzahnungskörper tragenden, koaxialen Wellen sind. Insbesondere kann es sich bei einem der externen Relativrotationskörper um das Gehäuse und bei einem anderen externen Relativrotationskörper um den Rotor einer elektrischen Maschine handeln. Bei dieser Konfiguration, können, je nach Schaltstellung, unterschiedliche Verzahnungskörper mittels des Verzahnungs-Axialbereiches eines der Hülsenteile zwecks Abstützung eines Drehmomentes am Gehäuse festgelegt und andere der Verzahnungskörper mittels des Verzahnungs-Axialbereiches des anderen Hülsenteils mit dem Rotor der elektrischen Maschine zwecks Eintrags eines Drehmomentes gekoppelt werden. Die Erfindung realisiert somit zwei unabhängig voneinander drehbare, jedoch gemeinsam verschiebbare Schiebehülsen, die hier jedoch als Hülsenteile einer zweiteiligen Schiebehülse beschrieben werden.

Im Ergebnis lassen sich deutlich komplexere Schaltkonstellationen realisieren, die insbesondere auch externe Relativrotationskörper einbeziehen.

Um den Axialantrieb der Schiebehülse möglichst bauraumschonend zu realisieren, ist erfindungsgemäß vorgesehen, dass die Schiebehülse mittels einer axial erstreckten Gewindestruktur in einer sie koaxial umgreifenden Betätigungshülse gelagert ist. Mit anderen Worten kann die Schiebehülse durch eine Art Spindeltrieb axial verschoben werden. Für den Fachmann ist es dabei offensichtlich, dass die Betätigungshülse nur im Bereich eines der Hülsenteile diesbezüglich mit der Schiebehülse wechselwirken darf. Die Betätigungshülse kann mittels eines motorischen Stellantriebs um ihre Längsachse rotierbar sein. Der Stellantrieb ist bei einer bevorzugten Ausführungsform der Erfindung drehfest an einem Gehäuse gelagert. Dies betrifft die bevorzugte Ausführungsform, bei der die jeweils mit dem ersten Hülsenteil verzahnten Verzahnungskörper am Gehäuse festgelegt werden sollen. Bei dieser Ausführungsform ist also auch der erste Hülsenteil der Schiebehülse drehfest am Gehäuse zu lagern. Relativ hierzu dreht die Betätigungshülse, angetrieben von einem gehäusefesten Stellantrieb. Der zweite Hülsenteil ist dagegen frei rotierbar, wird jedoch im Zuge einer Axialverschiebung des ersten Hülsenteils ebenfalls axial verschoben.

Gemäß einer bevorzugten Ausführungsform ist vorgesehen, dass der erste Hülsenteil und der zweite Hülsenteil einander axial überlappen und im Überlappungsbereich mittels einer Axialkräfte aufnehmenden Radiallagerung gegeneinander gelagert sind. Ein breiter Überlappungsbereich bietet dabei die Möglichkeit einer verkippungssicheren Lagerung. Bei einer grundsätzlich ebenfalls denkbaren Axiallagerung der Hülsenteile an ihren Stirnseiten aneinander müsste die Kippsicherung auf andere Weise realisiert werden.

Von einem ähnlichen Gedanken getragen ist auch eine günstige Ausgestaltung der Erfindung, wonach die Verzahnungskörper als geschachtelt angeordnete Kegelflansche ausgebildet sind, die paarweise gegeneinander axial gelagert sind. Denkbar ist selbstverständlich auch eine im Wesentlichen zylindrische Ausgestaltung der Verzahnungskörper. Die Ausgestaltung als geschachtelte Kegelflansche erlaubt jedoch einen axialen Überlappungsbereich zwischen jeweils zwei Verzahnungskörpern, der zur Anordnung eines Radiallagers genutzt werden kann. Diese hochintegrierte Bauform ist besonders bauraumgünstig.

Die Schiebehülse ist bevorzugt drehfest auf einem fest mit dem Gehäuse verbundenen, in die Betätigungshülse hineinragenden Fortsatz axial verschieblich gelagert. Wie erläutert, ist die Schiebehülse sowohl radial innen als auch radial außen von relativ zum Gehäuse drehbaren Elementen umgeben. Um dennoch eine Drehkopplung mit dem Gehäuse zu schaffen, sieht die beschriebene Ausführungsform einen zwischen den radial innen liegenden Wellen und der radial außen liegenden Betätigungshülse in die Schiebehülse hineinragenden Fortsatz vor, auf dem diese gelagert, insbesondere gleitgelagert ist.

Wie erläutert, ist der zweite Hülsenteil bei der erfindungsgemäßen Antriebseinheit mit dem Rotor einer elektrischen Maschine verbunden. Die Relativanordnung der elektrischen Maschine zur erfindungsgemäßen Schaltvorrichtung kann dabei auf unterschiedliche Weise gestaltet sein. Bei einer ersten Ausführungsform ist vorgesehen, das die Schiebehülse koaxial zum Rotor angeordnet und der zweite Hülsenteil drehfest mit dem Rotor verbunden ist. Insbesondere kann bei dieser Ausführungsform die erfindungsgemäße Schaltvorrichtung im (radial) Inneren der elektrischen Maschine angeordnet sein. Dies ist im Hinblick auf den axialen Bauraumbedarf besonders vorteilhaft.

Es sind jedoch auch Fälle denkbar, in denen die elektrische Maschine axial und/oder radial versetzt zur erfindungsgemäßen Schaltvorrichtung, insbesondere zu deren Schiebehülse angeordnet ist. Bei einer solchen Konfiguration ist bevorzugt vorgesehen, dass der zweite Hülsenteil über eine Zahnradstufe mit dem Rotor der elektrischen Maschine verbunden ist. Ein besonderes Merkmal dieser Ausgestaltung ist es zudem, dass eine Übersetzung zwischen dem Rotor und dem zweiten Hülsenteil realisiert werden kann. Der Begriff der Zahnradstufe ist in diesem Kontext weit zu verstehen. Es kann sich dabei um eine einfache, unmittelbare Zahnradstufe oder um eine komplexere Anordnung, beispielsweise in Form eines Planetensatzes, bei dem der zweite Hülsenteil die Sonne und der Rotor das Hohlrad des Planetensatzes darstellt, handeln.

Weitere Merkmale und Vorteile der Erfindung ergeben sich aus der nachfolgenden, speziellen Beschreibung und den Zeichnungen.

Es zeigen:
- Figur 1:: eine Schnittdarstellung einer Ausführungsform einer erfindungsgemäßen Antriebseinheit,
- Figur 2:: die Schaltvorrichtung der Antriebseinheit von Figur 1 in einer ersten Schaltstellung,
- Figur 3:: die Schaltvorrichtung von Figur 2 in einer zweiten Schaltstellung,
- Figur 4:: die Schaltvorrichtung von Figur 2 in einer dritten Schaltstellung,
- Figur 5:: die Schaltvorrichtung von Figur 2 in einer vierten Schaltstellung,
- Figur 6:: die Schaltvorrichtung von Figur 2 in einer fünften Schaltstellung,
- Figur 7:: die Schaltvorrichtung von Figur 2 in einer sechsten Schaltstellung,
- Figur 8:: die Schaltvorrichtung von Figur 2 in einer siebten Schaltstellung,
- Figur 9:: die Schaltvorrichtung von Figur 2 in einer achten Schaltstellung,
- Figur 10:: die Schaltvorrichtung von Figur 2 in einer neunten Schaltstellung.

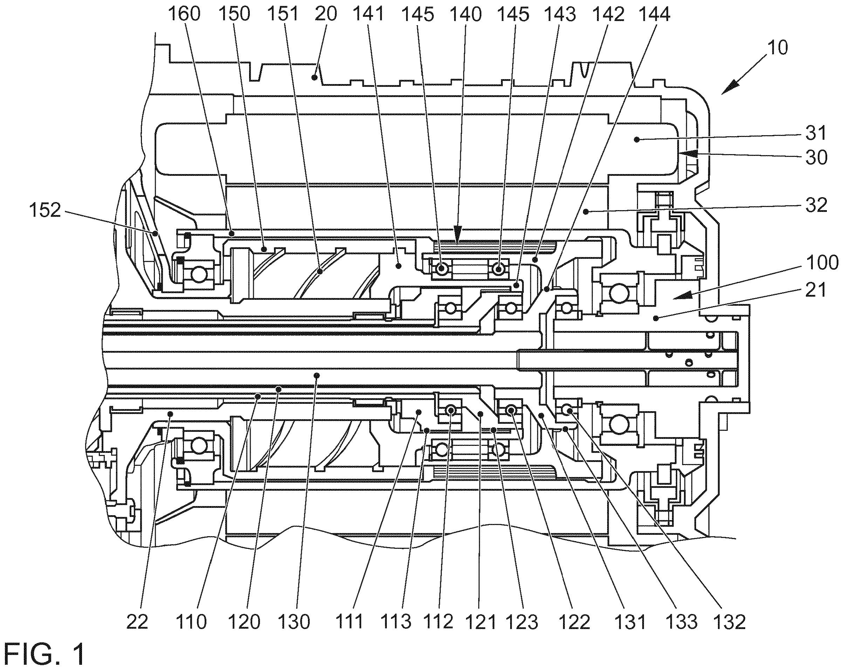

Gleiche Bezugszeichen in den Figuren weisen auf gleiche oder analoge Elemente hin. Figur 1 zeigt in einer Schnittdarstellung eine Ausführungsform einer erfindungsgemäßen Antriebseinheit 10, in der eine erfindungsgemäße Schaltvorrichtung 100 Einsatz findet.

Die Antriebseinheit 10 umfasst ein Gehäuse 20, in dem die übrigen Vorrichtungsbestandteile enthalten sind. Bei der dargestellten Ausführungsform ist insbesondere eine elektrische Maschine 30 in dem Gehäuse 20 integriert, deren Stator 31 gehäusefest montiert ist und deren Rotor 32 drehbar im Stator 31 gelagert ist. Radial innerhalb des Rotors 32 ist eine Schaltvorrichtung angeordnet, mit der drei koaxiale Wellen 110, 120, 130 wahlweise mit dem Rotor 32 oder dem Gehäuse 20 koppelbar sind. Die drei Wellen 110, 120, 130 durchsetzen einander koaxial, wobei eine erste Welle 110 die radial äußerste Welle, ein zweite Welle 120, die radial mittlere Welle und eine dritte Welle 130 die radial innerste Welle darstellt. Mit ihren Wellenenden überragen die koaxialen Wellen 110, 120, 130 einander stufenartig, wobei das Ende der zweiten Welle 120 über dasjenige der ersten Welle 110 hinausragt und das Ende der dritten Welle 130 über das Ende der zweiten Welle 120 hinausragt. Jede der
Wellen 110, 120, 130 trägt an ihrem Ende einen Verzahnungskörper 111, 121 bzw. 131, die bei der dargestellten Ausführungsform als verschachtelte Kegelflansche ausgebildet sind. Der erste Verzahnungskörper 111 ist fest mit dem Ende der ersten Welle 110 verbunden und überlappt in axialer Richtung bereichsweise mit dem zweiten Verzahnungskörper 121 der zweiten Welle 120. Im Überlappungsbereich der Verzahnungskörper 111, 121 ist ein Kugellager 112 angeordnet, über welches die beiden Verzahnungskörper 111, 121 gegeneinander abgestützt sind. Der zweite Verzahnungskörper 121, der fest auf dem Ende der zweiten Welle 120 angeordnet ist, überlappt in axialer Richtung bereichsweise den dritten Verzahnungskörper 131, der seinerseits auf dem Ende der dritten Welle 130 festgelegt ist. Im Überlappungsbereich zwischen dem zweiten Verzahnungskörper 121 und dem dritten Verzahnungskörper 131 ist ein Kugellager 122 angeordnet, mit welchem die beiden Verzahnungskörper 121, 131 gegeneinander abgestützt sind. Der dritte Verzahnungskörper 132 überlappt in axialer Richtung bereichsweise einen gehäusefesten Zapfen 21 und ist gegen diesen mit einem weiteren Kugellager 132 abgestützt. Jeder Verzahnungskörper 111, 121, 131 trägt in seinem radial äußersten Bereich eine Außenverzahnung 113, 123, bzw. 133. Diese Außenverzahnungen 113, 123, 133 dienen der Wechselwirkung mit einer Schiebehülse 140, welche die drei Verzahnungsköper 111, 121, 131 koaxial umgibt. Dabei ist die Schiebehülse 140 aus zwei Hülsenteilen 141, 142 gebildet, die einander axial überlappen. Jeder Hülsenteil 141, 142 trägt einen Verzahnungs-Axialbereich einer Innenverzahnung, nämlich der erste Hülsenteil 141 einen ersten Verzahnungs-Axialbereich 143 und der zweite Hülsenteil 142 einen zweiten Verzahnungs-Axialbereich 144. Die Innenverzahnung 143, 144 der Schiebehülse 140 korrespondiert mit den Außenverzahnungen 113, 123, 133 der Verzahnungskörper 111, 121, 131. In ihrem Überlappungsbereich sind die Hülsenteile 141, 142 mittels Kugellagern 145 einerseits gegeneinander drehentkoppelt, andererseits aber in Axialkräfte übertragender Weise miteinander verbunden. Bspw. können Rillenkugellager zur Erfüllung dieser Doppelfunktion verwendet werden. Man erkennt, dass je nach axialer Schiebestellung der Schiebehülse 140 eine andere Eingriffspaarung zwischen den Verzahnungs-Axialbereichen 143, 144 der Innenverzahnung der Schiebehülse 140 einerseits und den Außenverzahnungen 113, 123, 133 der Verzahnungskörper 111, 121, 131 realisierbar sind.

Bei der gezeigten Ausführungsform ist der erste Hülsenteil 141 drehfest und axial verschieblich auf einem gehäusefesten Fortsatz 22, der die koaxialen Wellen 110, 120 , 130 abschnittsweise umgreift, gelagert. Der zweite Hülsenteil 142 ist bei der gezeigten Ausführungsform über eine Koppelhülse 160 drehfest mit dem Rotor 32 der elektrischen Maschine 30 verbunden. Hieraus folgt, dass bei der gezeigten Ausführungsform jeweils diejenige Welle 110, 120, 130, deren zugeordnete Außenverzahnung 113, 123, 133 mit dem ersten Verzahnungs-Axialbereich 143 der Innenverzahnung der Schiebehülse 140 verzahnt ist, auf diese Weise drehfest mit dem Gehäuse 20 gekoppelt ist, während diejenige Welle 110, 120, 130, deren zugeordnete Außenverzahnung, 113, 123, 133 mit dem zweiten Verzahnungs-Axialbereich 144 der Innenverzahnung der Schiebehülse 140 verzahnt ist, drehfest mit dem Rotor 32 der elektrischen Maschine 30 verbunden ist.

Zur Betätigung der Schiebehülse, d.h. zu Ihrer Axialverschiebung, ist eine Betätigungshülse 150 vorgesehen, die den ersten Hülsenteil 141 bereichsweise koaxial umgreift und über eine Gewindestruktur 151 mit dem ersten Hülsenteil 141 verbunden ist. Eine Rotation der Betätigungshülse 150 führt somit nach Art eines Spindeltriebs zu einer Axialbewegung der Schiebehülse 140 und zwar sowohl ihres ersten Hülsenteils 141 als auch ihres zweiten Hülsenteils 142, der jedoch, wie erläutert, über die Lager 145 vom ersten Hülsenteil 141 drehentkoppelt ist. Die winkelgenaue Rotation der Betätigungshülse 150 wird durch einen nicht dargestellten, elektrischen Stellantrieb, der über ein Koppelrad 152 angekoppelt ist, bewirkt.

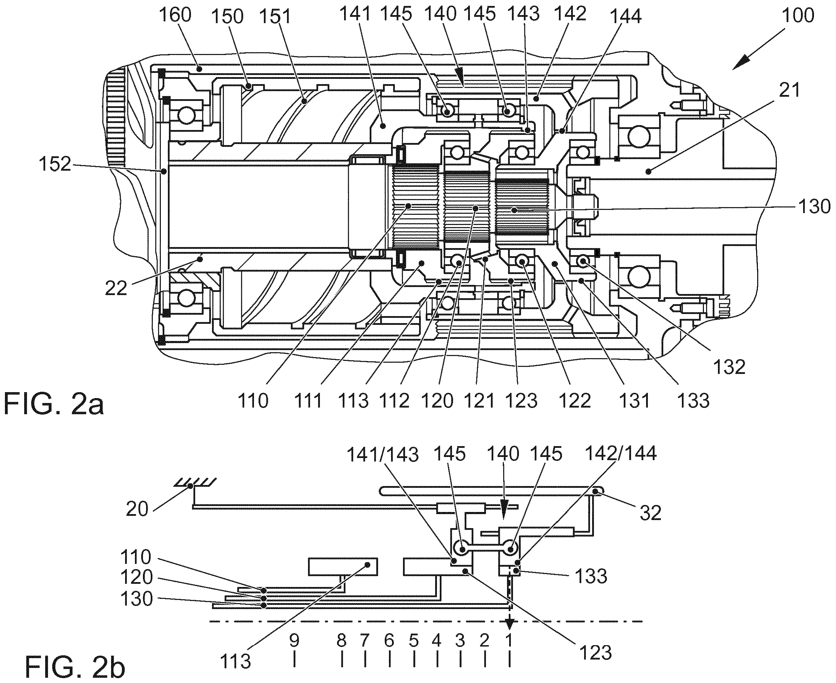

Figur 2 zeigt die Schaltvorrichtung 100 der Antriebseinheit 10 von Figur 1 in einer ersten Schaltstellung. Teilfigur 2a zeigt die Schaltvorrichtung 100 dabei in teilweise geschnittener Darstellung; Teilfigur 2b zeigt die Schaltvorrichtung 100 in stark schematisierter Darstellung. In dieser Schaltstellung ist der erste Verzahnungs-Axialbereich 143 der Innenverzahnung mit der Außenverzahnung 123 des zweiten Verzahnungskörpers 121 verzahnt. Der zweite Verzahnungs-Axialbereich 144 ist in dieser Schaltstellung mit der Außenverzahnung 133 des dritten Verzahnungskörpers 131 verzahnt. Die zweite Welle 120 ist somit am Gehäuse 20 festgelegt, während die dritte Welle 130 drehfest mit dem Rotor 32 gekoppelt ist. Die erste Welle 110 ist in dieser Schaltstellung von der Schaltvorrichtung 100 unbeeinflusst.

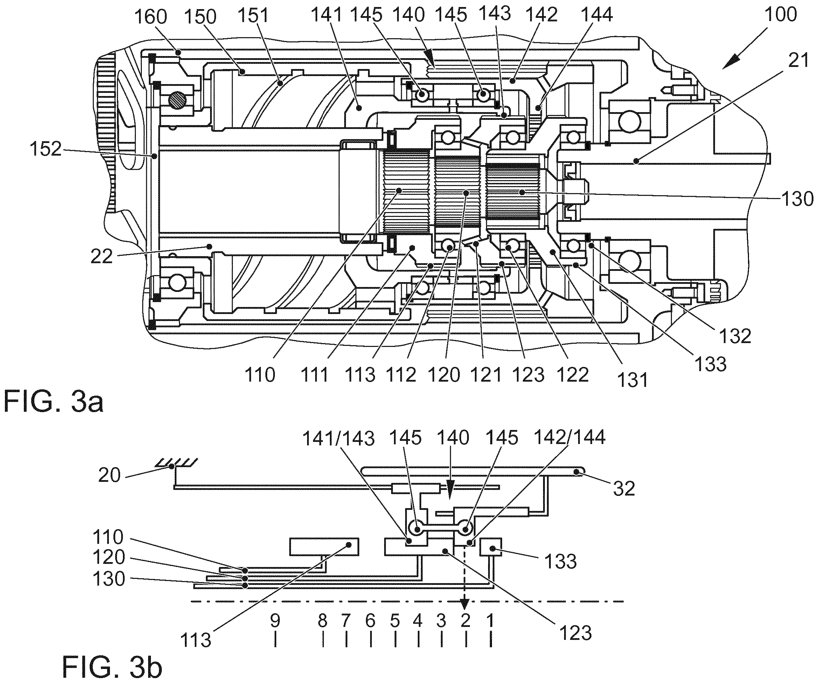

Figur 3 zeigt die Schaltvorrichtung 100 in der gleichen Darstellungsweise wie Figur 2, wobei sich die Schaltvorrichtung 100 hier jedoch in einer zweiten Schaltstellung befindet, in der die Schiebehülse 140 geringfügig nach links verschoben ist, sodass sich ihr zweiter Hülsenteil 142 außer Eingriff mit dem dritten Verzahnungskörper 133 befindet.

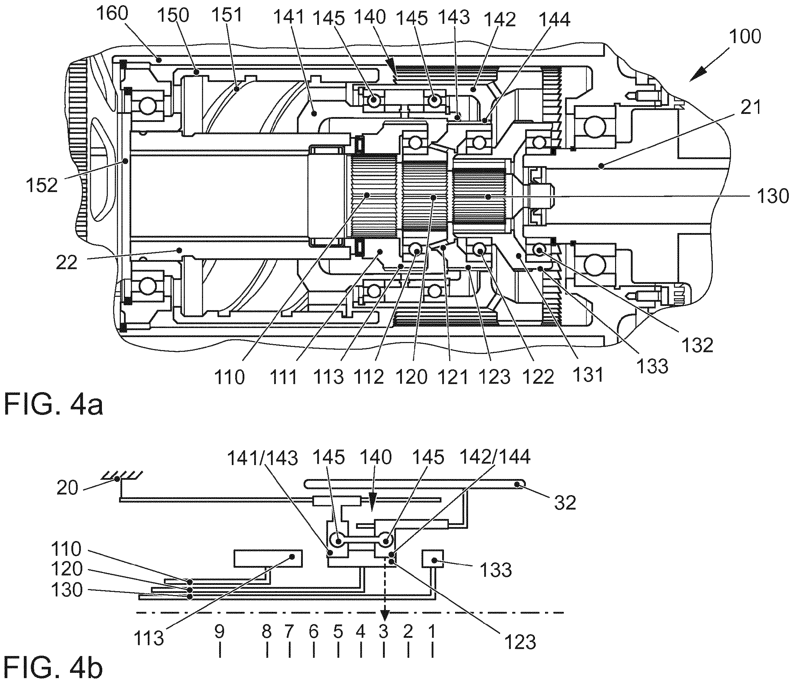

Figur 4 zeigt die Schaltvorrichtung 100 in einer dritten Schaltstellung, in der die Schiebehülse 140 noch weiter nach links verschoben ist, sodass sich sowohl der erste Hülsenteil 141 als auch der zweite Hülsenteil 142 mit dem zweiten Verzahnungskörper 121 in Zahneingriff befindet. In dieser Stellung sind sowohl die zweite Welle 120 als auch der Rotor 32 am Gehäuse 20 festgelegt.

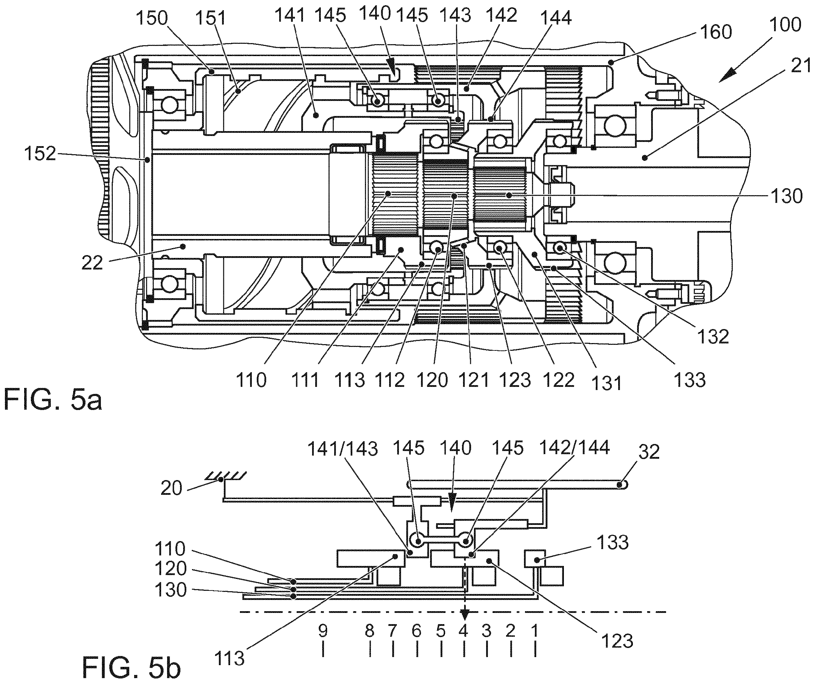

Figur 5 zeigt die Schaltvorrichtung 100 in einer vierten Schaltstellung, in der die Schiebehülse 140 noch weiter nach links verschoben ist, sodass der erste Hülsenteil 141 außer Zahneingriff mit dem Verzahnungskörper 121 gerät und lediglich der zweite Hülsenteil 142 mit dem zweiten Verzahnungskörper 122 verzahnt ist. In dieser Schaltstellung ist die zweite Welle 120 drehfest mit dem Rotor 32 verbunden.

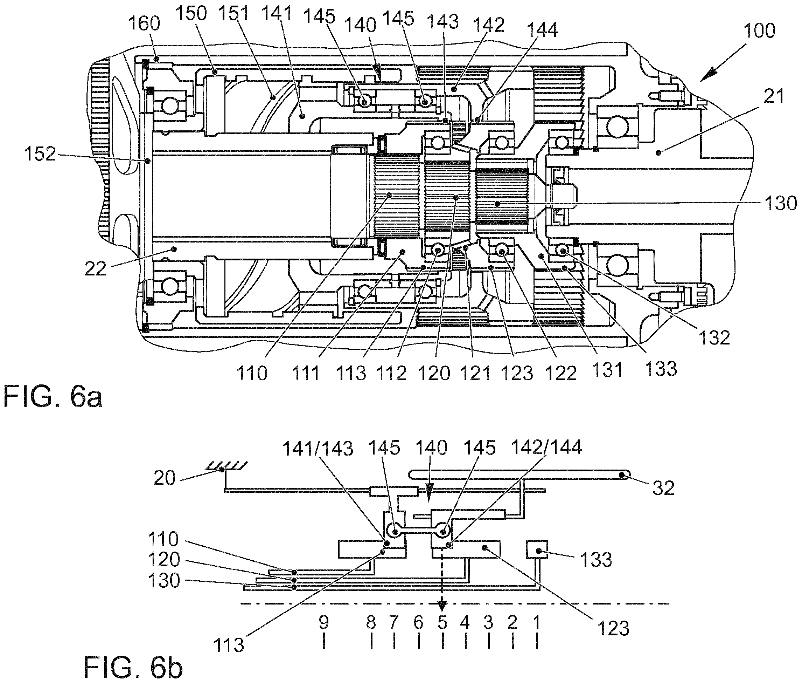

Figur 6 zeigt die Schaltvorrichtung 100 in einer fünften Schaltstellung, in der die Schiebehülse 140 noch weiter nach links verschoben ist. Hier steht der erste Hülsenteil 141 in Zahneingriff mit dem ersten Verzahnungskörper 111 und der zweite Hülsenteil 142 steht in Zahneingriff mit dem zweiten Verzahnungskörper 121. In dieser Schaltstellung ist die erste Welle 110 am Gehäuse 20 festgelegt, während die zweite Welle 120 drehfest mit dem Rotor 32 verbunden ist.

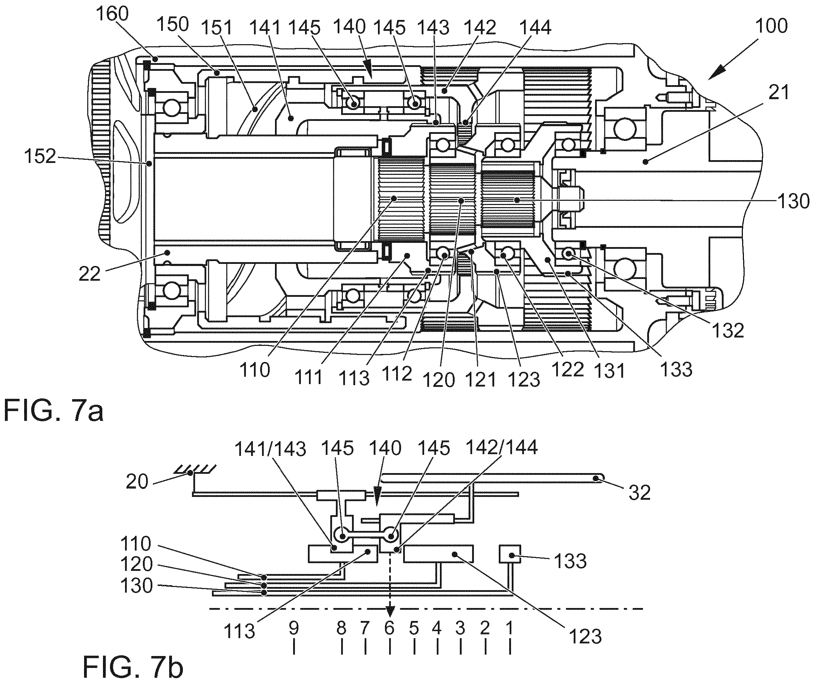

Figur 7 zeigt die Schaltvorrichtung 100 in einer sechsten Schaltstellung, in der die Schiebehülse 140 noch weiter nach links verschoben ist. Hier ist der zweite Hülsenteil 142 außer Zahneingriff mit dem zweiten Verzahnungskörper 121 geraten, während die erste Welle 110 noch immer über den ersten Hülsenteil 141 am Gehäuse 20 festgelegt ist.

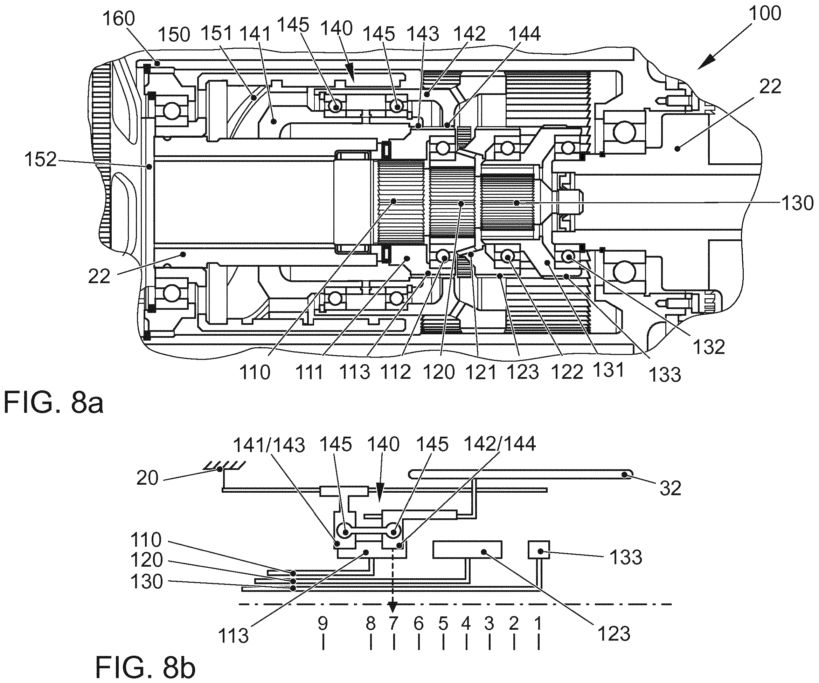

Figur 8 zeigt die Schaltvorrichtung 100 in einer siebten Schaltstellung, in der die Schiebehülse 140 noch weiter nach links verschoben ist. Hier sind sowohl der erste Hülsenteil 141 als auch der zweite Hülsenteil 142 in Zahneingriff mit dem ersten

Verzahnungskörper 111. In dieser Schaltstellung sind die Welle 110 und der Rotor 32 am Gehäuse 20 festgelegt.

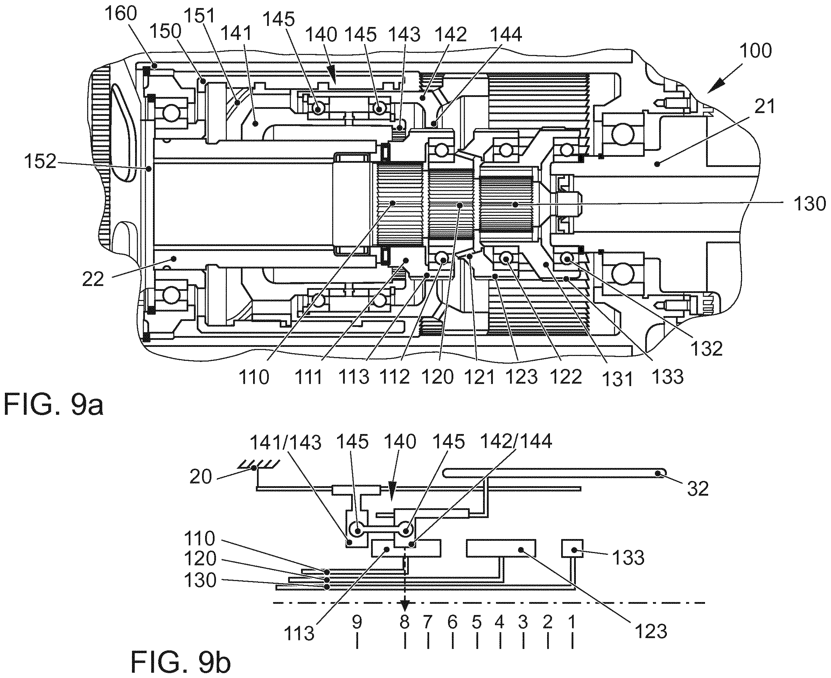

Figur 9 zeigt die Schaltvorrichtung 100 in einer achten Schaltstellung, in der die Schiebehülse 140 noch weiter nach links verschoben ist. Hier steht nur noch der zweite Hülsenteil 142 mit dem ersten Verzahnungskörper 111 in Zahneingriff. In dieser Schaltstellung ist die erste Welle drehfest mit dem Rotor 32 verbunden.

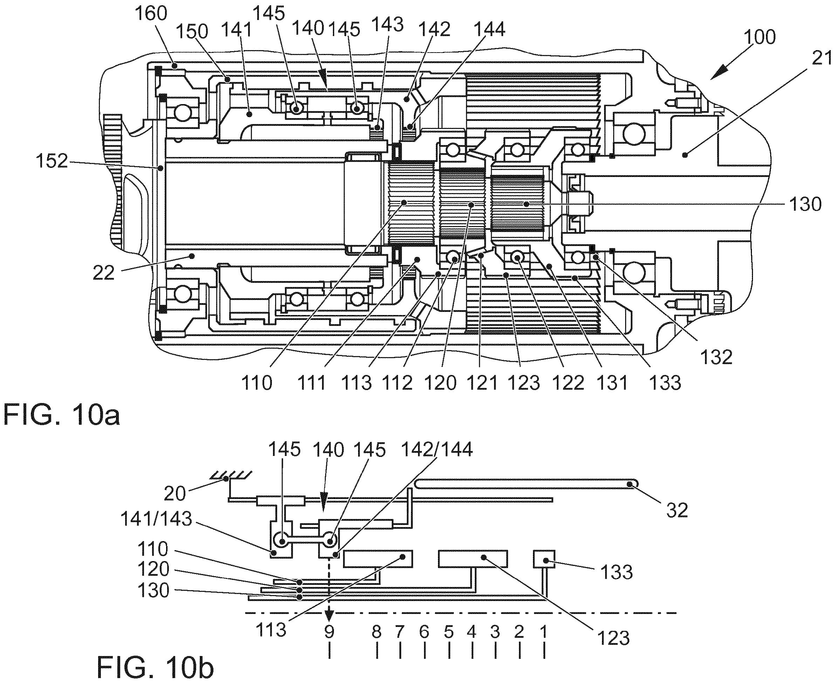

Figur 10 zeigt die Schaltvorrichtung 100 in einer neunten Schaltstellung, in der die Schiebehülse 140 maximal nach links verschoben ist. Hier steht keiner der Hülsenteile 141, 142 mit irgendeinem Verzahnungskörper in Zahneingriff. Alle Relativrotationselemente, d.h. erste Welle 110, zweite Welle 120, dritte Welle 130, Rotor 32 und Gehäuse 20 sind unabhängig relativ zueinander drehbar.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum an Variationsmöglichkeiten an die Hand gegeben, immer innerhalb des durch die Ansprüchen definierten Gegenstands.

### Bezugszeichenliste

- 10: Antriebseinheit
- 20: Gehäuse
- 21: gehäusefester Zapfen
- 22: gehäusefester Fortsatz
- 30: elektrische Maschine
- 31: Stator
- 32: Rotor
- 100: Schaltvorrichtung
- 110: erste Welle
- 111: erster Verzahnungskörper
- 112: erstes Lager
- 113: Außenverzahnung von 111
- 120: zweite Welle
- 121: zweiter Verzahnungskörper
- 122: zweites Lager
- 123: Außenverzahnung von 121
- 130: dritte Welle
- 131: dritter Verzahnungskörper
- 132: drittes Lager
- 133: Außenverzahnung von 131
- 140: Schiebehülse
- 141: erster Hülsenteil
- 142: zweiter Hülsenteil
- 143: erster Verzahnungs-Axialbereich
- 144: zweiter Verzahnungs-Axialbereich
- 145: Lager
- 150: Betätigungshülse
- 151: Gewindestruktur
- 152: Koppelrad
- 160: Koppelhülse

## Patentansprüche

1. Schaltvorrichtung (100) zur selektiven Anwahl drehfester Kopplungen einer Mehrzahl koaxialer Wellen (110, 120, 130) eines Kraftfahrzeuggetriebes, umfassend
- ein Gehäuse (20),
- eine relativ zu dem Gehäuse (20) axial verschiebliche Schiebehülse (140), die eine Innenverzahnung mit zwei um eine axiale Lücke voneinander beabstandeten Verzahnungs-Axialbereichen (143, 144) aufweist,
- und eine Mehrzahl von der Schiebehülse (140) koaxial umgriffener, einander axial benachbart angeordneter Verzahnungskörper (111, 121, 131), die drehfest mit jeweils einer der Wellen (110, 120, 130) verbunden sind und je eine zur Innenverzahnung der Schiebehülse (140) korrespondierende Außenverzahnung (113, 123, 133) tragen, wobei die Schiebehülse (140) einen ersten Hülsenteil (141) und einen zweiten Hülsenteil (142) aufweist, die axial fest und rotativ entkoppelt miteinander verbunden sind, wobei der erste Hülsenteil (141) Träger des ersten Verzahnungs-Axialbereichs (143) und der zweite Hülsenteil (142) Träger des zweiten Verzahnungs-Axialbereichs (144) ist, **dadurch gekennzeichnet,**
**dass** die Schiebehülse (140) mittels einer axial erstreckten Gewindestruktur (151) in einer sie koaxial umgreifenden Betätigungshülse (150) gelagert ist.

2. Schaltvorrichtung (100) nach Anspruch 1,
**dadurch gekennzeichnet,**
**dass** der erste Hülsenteil (141) und der zweite Hülsenteil (142) einander axial überlappen und im Überlappungsbereich mittels einer Axialkräfte aufnehmenden Radiallagerung (145) gegeneinander gelagert sind.

3. Schaltvorrichtung (100) nach einem der vorangehenden Ansprüche,
**dadurch gekennzeichnet,**
**dass** die Verzahnungskörper (111, 121, 131) als geschachtelt angeordnete Kegelflansche ausgebildet sind, die paarweise gegeneinander radialgelagert sind.

4. Schaltvorrichtung (100) nach einem der vorangehenden Ansprüche,
**dadurch gekennzeichnet,**
**dass** die Betätigungshülse (150) mittels eines motorischen Stellantriebs um ihre Längsachse rotierbar ist.

5. Schaltvorrichtung (100) nach einem der vorangehenden Ansprüche,
**dadurch gekennzeichnet,**
**dass** die Schiebehülse (140) drehfest auf einem fest mit dem Gehäuse (20) verbundenen, in die Betätigungshülse (150) hineinragenden Fortsatz (22) axial verschieblich gelagert ist.

6. Antriebseinheit (10) für ein Kraftfahrzeug, umfassend
- eine elektrische Maschine (30) mit einem Stator (31) und einem drehbar in dem Stator (31) angeordneten Rotor (32),
- eine Getriebeanordnung mit einer Mehrzahl von Wellen (110, 120, 130), die koaxial zueinander angeordnet sind und an ihren einander stufenartig überragenden Anschlussenden je einen Verzahnungskörper (111, 121, 131) mit einer Außenverzahnung (113, 123, 133) tragen, und
- eine Schaltvorrichtung (100) mit einer axial verschieblichen Schiebehülse (140), die die Verzahnungskörper (111, 121, 131) koaxial umgreift und eine zur Außenverzahnung (113, 123, 133) der Verzahnungskörper (111, 121, 131) korrespondierende Innenverzahnung mit zwei um eine axiale Lücke voneinander beabstandeten Verzahnungs-Axialbereichen (143, 144) aufweist,
**dadurch gekennzeichnet,**
**dass** die Schaltvorrichtung (10) als eine Schaltvorrichtung nach einem der vorangehenden Ansprüche ausgebildet ist,
wobei der zweite Hülsenteil (142) der Schiebehülse (140) mit dem Rotor (32) der elektrischen Maschine (30) verbunden ist.

7. Antriebseinheit (10) nach Anspruch 6,
**dadurch gekennzeichnet,**
**dass** die Schiebehülse (140) koaxial zum Rotor (32) angeordnet und der zweite Hülsenteil (142) drehfest mit dem Rotor verbunden ist.

8. Antriebseinheit (10) nach einem der Ansprüche 6 bis 7,
**dadurch gekennzeichnet,**
**dass** der zweite Hülsenteil über eine Zahnradstufe mit dem Rotor der axial und/oder radial versetzt zu der Schiebehülse angeordneten elektrischen Maschine verbunden ist.

## Claims

1. Shifting device (100) for selectively choosing rotationally fixed couplings of a plurality of coaxial shafts (110, 120, 130) of a motor vehicle transmission, comprising
- a housing (20),
- a sliding sleeve (140) that is axially displaceable relative to the housing (20) and has an internal toothing with two toothed axial regions (143, 144) spaced apart from one another by an axial gap,
- and a plurality of toothed bodies (111, 121, 131) that are arranged coaxially surrounding the sliding sleeve (140) and adjacent to one another, which are each rotationally firmly connected to one of the shafts (110, 120, 130) and each carry an outer toothing (113, 123, 133) corresponding to the inner toothing of the sliding sleeve (140), wherein the sliding sleeve (140) has a first sleeve part (141) and a second sleeve part (142), which are connected to one another in an axially fixed and rotationally decoupled manner, wherein the first sleeve part (141) is a carrier of the first toothed axial region (143) and the second sleeve part (142) is a carrier of the second toothed axial region (144), **characterized in that**
the sliding sleeve (140) is mounted by means of an axially extending threaded structure (151) in an actuating sleeve (150) that coaxially surrounds it.

2. Shifting device (100) according to claim 1,
**characterized in that**
the first sleeve part (141) and the second sleeve part (142) overlap one another axially and are mounted to each other in the overlapping region by means of a
radial bearing (145) that absorbs axial forces.

3. Shifting device (100) according to any of the preceding claims, **characterized in that**
the toothing bodies (111, 121, 131) are designed as nested conical flanges that are radially mounted in pairs with respect to one another.

4. Shifting device (100) according to any of the preceding claims, **characterized in that**
the actuating sleeve (150) can be rotated about its longitudinal axis by means of a motorized actuating drive.

5. Shifting device (100) according to any of the preceding claims,
**characterized in that**
the sliding sleeve (140) is mounted in an axially displaceable manner on a projection (22) that is firmly connected to the housing (20) and projects into the actuating sleeve (150).

6. Drive unit (10) for a motor vehicle, comprising:
- an electrical machine (30) having a stator (31) and a rotor (32) rotatably arranged in the stator (31),
- a gear assembly having a plurality of shafts (110, 120, 130) that are arranged coaxially to one another and each carry on their connecting ends that project in a steplike manner in relation to one another a toothing body (111, 121, 131) with an outer toothing (113, 123, 133), and
- a shifting device (100) having an axially displaceable sliding sleeve (140) that coaxially surrounds the toothed bodies (111, 121, 131) and has an inner toothing corresponding to the
outer toothing (113, 123, 133) of the toothed bodies (111, 121, 131) and having two toothed axial regions (143, 144) that are spaced apart from one another by an axial gap,
**characterized in that**
the shifting device (10) is embodied as a shifting device according to any of the preceding claims,
wherein the second sleeve part (142) of the sliding sleeve (140) is connected to the rotor (32) of the electrical machine (30).

7. Drive unit (10) according to claim 6,
**characterized in that**
the sliding sleeve (140) is arranged coaxially to the rotor (32) and the second sleeve part (142) is connected to the rotor in a rotationally fixed manner.

8. Drive unit (10) according to any of claims 6 to 7,
**characterized in that**
the second sleeve part is connected via a gear-wheel stage to the rotor of the electrical machine arranged axially and/or radially offset to the sliding sleeve.

## Revendications

1. Dispositif de changement de vitesses (100) pour la sélection sélective d'embrayages solidaires en rotation d'une pluralité d'arbres coaxiaux (110, 120, 130) d'une boîte de vitesses de véhicule automobile, comprenant
- un carter (20),
- une douille coulissante (140) mobile axialement par rapport au carter (20), qui présente une denture intérieure dotée de deux régions axiales de denture (143, 144) espacées l'une de l'autre par un interstice axial,
- et une pluralité de corps de denture (111, 121, 131) disposés de manière axialement adjacente les uns aux autres et venant en prise coaxialement autour de la douille coulissante (140), qui sont reliés de manière solidaire en rotation respectivement à l'un des arbres (110, 120, 130) et portent respectivement une denture extérieure (113, 123, 133) correspondant à la denture intérieure de la douille coulissante (140), dans lequel la douille coulissante (140) présente une première partie de douille (141) et une seconde partie de douille (142), qui sont reliées l'une à l'autre de manière fixe axialement et de manière désaccouplée en rotation, dans lequel la première partie de douille (141) est un support de la première région axiale de denture (143) et la deuxième partie de douille (142) est un support de la deuxième région axiale de denture (144), **caractérisé**
**en ce que** la douille coulissante (140) est supportée dans une douille d'actionnement (150) qui l'enserre coaxialement au moyen d'une structure de filetage (151) s'étendant axialement.

2. Dispositif de changement de vitesses (100) selon la revendication 1,
**caractérisé**
**en ce que** la première partie de douille (141) et la deuxième partie de douille (142) se chevauchent axialement et sont supportées dans une zone de chevauchement l'une contre l'autre
au moyen d'un palier radial (145) absorbant les forces axiales.

3. Dispositif de changement de vitesses (100) selon l'une quelconque des revendications précédentes, **caractérisé**
**en ce que** les corps de denture (111, 121, 131) sont conçus sous forme de brides coniques disposées emboîtées, qui sont supportées radialement les unes contre les autres par paires.

4. Dispositif de changement de vitesses (100) selon l'une quelconque des revendications précédentes, **caractérisé**
**en ce que** la douille d'actionnement (150) peut tourner au moyen d'un servomoteur autour de son axe longitudinal.

5. Dispositif de changement de vitesses (100) selon l'une quelconque des revendications précédentes,
**caractérisé**
**en ce que** la douille coulissante (140) est supportée mobile axialement de manière solidaire en rotation sur une extension (22) faisant saillie dans la douille d'actionnement (150) et reliée à demeure avec le carter (20).

6. Unité d'entraînement (10) pour un véhicule automobile, comprenant
- une machine électrique (30) comprenant un stator (31) et un rotor (32) agencé rotatif dans le stator (31),
- un dispositif d'engrenage comprenant une pluralité d'arbres (110, 120, 130), qui sont disposés coaxialement les uns par rapport aux autres et portent respectivement au niveau de leurs extrémités de raccordement en saillie par palier un corps de denture (111, 121, 131) avec une denture extérieure (113, 123, 133) et
- un dispositif de changement de vitesses (100) comprenant une douille coulissante (140) mobile axialement, qui enserre coaxialement les corps de denture (111, 121, 131) et présente une
denture intérieure correspondant à la denture extérieure (113, 123, 133) des corps de denture (111, 121, 131) avec deux régions axiales de denture (143, 144) espacées l'une de l'autre par un interstice axial,
**caractérisé**
**en ce que** le dispositif de changement de vitesses (10) est conçu comme un dispositif de changement de vitesses selon l'une quelconque des revendications précédentes,
dans lequel la deuxième partie de douille (142) de la douille coulissante (140) est reliée au rotor (32) de la machine électrique (30).

7. Unité d'entraînement (10) selon la revendication 6,
**caractérisée**
**en ce que** la douille coulissante (140) est agencée coaxialement par rapport au rotor (32) et la deuxième partie de douille (142) est reliée de manière solidaire en rotation au rotor.

8. Unité d'entraînement (10) selon l'une quelconque des revendications 6 à 7,
**caractérisée**
**en ce que** la deuxième partie de douille est reliée, par le biais d'un rapport d'engrenage, au rotor de la machine électrique disposée avec un décalage axial et/ou radial par rapport à la douille coulissante.
